# EUROPÄISCHE PATENTSCHRIFT

(11) **EP 3 704 180 B1**
(45) Veröffentlichungstag und Bekanntmachung des Hinweises auf die Patenterteilung: **04.08.2021**
(21) Anmeldenummer: 18799469.4
(22) Anmeldetag: 30.10.2018
(51) Int. Cl.: C08J 5/00, C08J 5/04

(54) **FASERVERSTÄRKTES VERBUNDMATERIAL UND VERFAHREN ZUR HERSTELLUNG EINES FASERVERSTÄRKTEN VERBUNDMATERIALS**
FIBER-REINFORCED COMPOSITE MATERIAL AND METHOD FOR PRODUCING A FIBER-REINFORCED COMPOSITE MATERIAL
COMPOSITE RENFORCÉ PAR DES FIBRES ET PROCÉDÉ POUR LA FABRICATION D'UN COMPOSITE RENFORCÉ PAR DES FIBRES

(30) Priorität: 30.10.2017 DE 102017125438
(43) Veröffentlichungstag der Anmeldung: 09.09.2020
(73) Patentinhaber: Neue Materialien Fürth GmbH, 90762 Fürth (DE)
(72) Erfinder: LÜCK, André, 90530 Wendelstein (DE); DRUMMER, Dietmar, 91564 Neuendettelsau (DE)
(74) Vertreter: Dr. Gassner & Partner mbB
(86) Internationale Anmeldenummer: PCT/EP2018/079669
(87) Internationale Veröffentlichungsnummer: WO 2019/086431

(56) Entgegenhaltungen:
- EP-A1- 1 785 402
- EP-A1- 2 597 120
- EP-A2- 0 945 253
- WO-A1-2013/045552
- WO-A1-2014/160362

## Beschreibung

Die Erfindung betrifft ein faserverstärktes Verbundmaterial, umfassend ein Fasermaterial, das mehrere jeweils aus Filamenten gebildete Endlosfasern aufweist, ein Matrixmaterial aus Kunststoff, das einen inneren Raumbereich zwischen den Filamenten einer jeweiligen Endlosfaser ausfüllt und die Endlosfasern in einem äußeren Raumbereich umgibt, und eine Menge von Partikeln. Daneben betrifft die Erfindung ein Verfahren zur Herstellung eines faserverstärkten Verbundmaterials.

Faserverstärkte Verbundmaterialien sind als Werkstoffe aus mindestens zwei ineinander nicht löslichen Komponenten seit langem bekannt. Die Materialeigenschaften der einzelnen Komponenten sind dabei deutlich unterschiedlich, jedoch ist der Verbund makroskopisch quasi homogen. Werden als Matrixmaterial Kunststoffe, beispielsweise Thermoplaste, verwendet, sind die meisten Materialeigenschaften stark temperaturabhängig. Im Gegensatz dazu sind die Endlosfasern ein dreidimensional vernetzter Werkstoff und zeigen deshalb in einem vergleichbaren Temperaturbereich keine signifikanten Änderungen ihrer Materialeigenschaften, zum Beispiel der Festigkeit. Diese unterschiedliche Temperaturabhängigkeit führt zu einer stark unterschiedlichen Volumenausdehnung des Matrixmaterials und der Endlosfasern, welche sich in einem Abzeichnen textiler Strukturen auf der Oberfläche, bekannt als Telegraphing-Effekt, äußert. Das Verbessern der Oberflächengüte von faserverstärkten Verbundmaterialien ist dementsprechend eine bekannte Herausforderung im Stand der Technik.

DE 37 89 054 T2 offenbart ein Prepreg, das aus Verstärkungsfasern, die mit einem Matrixharz gemischt sind, sowie aus feinen Teilchen besteht. Das Matrixharz ist ein wärmehärtendes Harz oder eine Mischung aus einem wärmehärtenden Harz und einem thermoplastischen Harz. Dabei befinden sich zumindest 90 % der Teilchen in Zonen auf einer oder beiden Seiten des Prepregs.

EP 0 002 953 A2 offenbart einen faserverstärkten Kunststoff, umfassend eine Schicht aus einem Kunststoffmaterial mit einer darin eingebundenen Faserverstärkung, welche ein Laminat aus einer Mikrosphären enthaltenden Endlosglasfasermatte zwischen Matten aus zerkleinerten Glasfasern aufweist.

DE 41 24 951 A1 offenbart einen Schichtstoff, bestehend aus einer Kernschicht aus einem Olefinpolymerisat, insbesondere aus einem glasmattenverstärkten Polypropylen, und mindestens einer Deckschicht aus einem gehärteten ungesättigten Polyesterharz, wobei die Schichten ohne haftvermittelnde Zwischenschichten oder mechanische Verankerung unmittelbar miteinander verbunden sind und aneinanderhaften, sodass beim Versuch, sie zu trennen, eine Rissfront nicht an einer Grenzfläche, sondern innerhalb einer der beiden Schichten verläuft.

Beide vorgenannten Verbundmaterialien in den Dokumenten EP 0 002 953 A2 und DE 41 24 951 A1 versuchen mithin eine Verbesserung der Oberflächengüte durch eine Kaschierung mit zusätzlichen Deckschichten auf den durch das Matrixmaterial getränkten Endlosfasern zu erzielen. Aufgrund der stark temperatur- und zeitabhängigen mechanischen Eigenschaften des Matrixmaterials führt ein solcher Ansatz jedoch trotzdem über die Lebenszeit des Verbundmaterials zum Abzeichnen der textilen Strukturen. Eine dauerhafte Verbesserung der Oberflächengüte wird daher nicht oder nur unzureichend erzielt.

Der Erfindung liegt mithin die Aufgabe zugrunde, ein faserverstärktes Verbundmaterial mit einer dauerhaft hohen Oberflächengüte anzugeben.

Zur Lösung dieser Aufgabe ist erfindungsgemäß bei einem faserverstärkten Verbundmaterial der eingangs genannten Art vorgesehen, dass eine erste Volumenkonzentration der Partikel bezogen auf das Matrixmaterial im inneren Raumbereich geringer als eine zweite Volumenkonzentration der Partikel bezogen auf das Matrixmaterial im äußeren Raumbereich ist.

Es wurde im Rahmen der Erfindung erkannt, dass sehr kleine Partikel bei herkömmlichen Verbundmaterialien nach einer Zugabe des Matrixmaterials und der Partikel zu den Endlosfasern in den inneren Raumbereich eindringen und so homogene erste und zweite Volumenkonzentrationen entstehen. Sind die Partikel größer gewählt, setzen sie Zwischenräume zwischen den Filamenten einer Endlosfaser zu, "verstopfen" sie also gleichsam, so dass das Matrixmaterial nicht in den inneren Raumbereich gelangt und eine Imprägnierung der Endlosfaser unterbleibt. In beiden Fällen kommt es zu einem unerwünschten Abzeichnen textiler Strukturen der Endlosfasern auf der Oberfläche des Verbundmaterials bei thermischen und/oder mechanischen Zustandsänderungen. Die Erfindung begegnet diesem nachteiligen Effekt, indem sie ein Eindringen der Partikel in den inneren Raumbereich vermeidet, aber trotzdem eine vollständige Tränkung bzw. Imprägnierung des inneren Raumbereichs durch das Matrixmaterial vorsieht, um eine höhere Volumenkonzentration der Partikel im äußeren Raumbereich als im inneren Raumbereich zu erzielen. Wie im Hinblick auf ein geeignetes Herstellungsverfahren im Folgenden noch genauer erläutert wird, kann die geringere erste Volumenkonzentration im Vergleich zur zweiten Volumenkonzentration dadurch erreicht werden, dass bei der Zugabe des Matrixmaterials und der Partikel zu den Endlosfasern durch geeignete Wahl der Partikel eine Trennung oder Entmischung dieser Phasen erfolgt, so dass hauptsächlich das Matrixmaterial in die Zwischenräume zwischen den Filamenten gelangt und die Partikel zum Großteil außerhalb verbleiben.

Insbesondere kann so die zweite Volumenkonzentration im äußeren Raumbereich derart an eine auf das Matrixmaterial bezogene Volumenkonzentration der Filamente im inneren Raumbereich angepasst werden, dass sich die gewünschten temperatur- und/oder zeitabhängig Materialeigenschaften des Verbundmaterials im äußeren Raumbereich und im inneren Raumbereich angleichen. Damit unterscheidet sich das erfindungsgemäße Verbundmaterial auch von herkömmlichen Ansätzen, bei denen versucht wird, die Materialeigenschaften der Endlosfasern an jene des Matrixmaterials und der Partikel anzupassen. Ebenso erfolgt beim erfindungsgemäßen Verbundmaterial im Gegensatz zu herkömmlichen Verbundmaterialien eine Anpassung der Materialeigenschaften im Wesentlichen nur in solchen Bereichen, die einer starken Schwindung unterliegen.

Vorteilhafterweise werden so die thermischen Ausdehnungseigenschaften bzw. das Quellverhalten des Verbundmaterials im äußeren Raumbereich und im inneren Raumbereich aneinander angepasst, um bei einer thermischen Beanspruchung und/oder durch viskoelastische Materialeigenschaften bedingten Veränderungen des Verbundmaterials über die Zeit ein ähnliches Verhalten des Verbundmaterials im inneren Raumbereich und im äußeren Raumbereich zu erzielen. Das Abzeichnen der textilen Strukturen wird somit unabhängig von der thermischen Beanspruchung und/oder der zeitlichen Veränderungen verhindert oder zumindest verringert. Dementsprechend kann über die Lebensdauer des Verbundmaterials eine im Wesentlichen gleichbleibende Oberflächengüte erzielt werden. Weitere Vorteile ergeben sich dadurch, dass nur eine geringe Menge von Partikeln im Gemisch verwendet werden kann, weil die erste Volumenkonzentration der Partikel geringer als die zweite Volumenkonzentration ist. Es ist sogar möglich eine zweite Volumenkonzentration zu erzielen, die so hoch ist, dass ein Gemisch aus dem Matrixmaterial und den Partikeln mit einer entsprechenden Volumenkonzentration gar nicht verarbeitbar wäre.

Die Filamente sind nicht Teil des inneren Raumbereichs. Der innere Raumbereich und der äußere Raumbereich sind überschneidungsfrei definiert. Der innere Raumbereich kann im Querschnitt durch eine um die äußersten Filamente einer jeweiligen Endlosfaser verlaufende Konturlinie begrenzt sein. Der äußere Raumbereich ist typischerweise durch Randbereiche des Verbundmaterials und/oder durch eine Grenzfläche des Matrixmaterials zu einem anderen Material begrenzt. Der innere und der äußere Raumbereich können den gesamten durch das Matrixmaterial und die Partikel gefüllten Bereich des Verbundmaterials umfassen. Die erste und die zweite Volumenkonzentration sind typischerweise homogen, was gleichsam im Wesentlichen homogene Materialeigenschaften des Verbundmaterials in transversaler Richtung ermöglicht. Dies bezieht sich typischerweise auf eine makroskopische Homogenität. Das Matrixmaterial imprägniert und/oder konsolidiert das Fasermaterial zweckmäßigerweise vollständig. Typischerweise ist das Matrixmaterial ein Thermoplast oder ein Duroplast.

Bevorzugt sind die erste Volumenkonzentration und die zweite Volumenkonzentration derart gewählt, dass ein temperaturspezifischer Ausdehnungskoeffizient des Verbundmaterials im inneren Raumbereich um höchstens 15 %, bevorzugt um höchstens 10 %, besonders bevorzugt um höchstens 5 %, von einem temperaturspezifischen Ausdehnungskoeffizienten des Verbundmaterials im äußeren Raumbereich abweicht.

Um auch ein möglichst aneinander angepasstes viskoelastisches Verhalten im äußeren und inneren Raumbereich zu erzielen, ist es zudem von Vorteil, wenn die erste Volumenkonzentration und die zweite Volumenkonzentration derart gewählt sind, dass eine ein viskoelastisches Verhalten des Verbundmaterials beschreibende zeitliche Ausdehnungsgröße im inneren Raumbereich um höchstens 25 %, bevorzugt um höchstens 10 %, besonders bevorzugt um höchstens 5 %, von der zeitlichen Ausdehnungsgröße im äußeren Raumbereich abweicht.

Experimentell hat es sich als besonders günstig erwiesen, wenn die zweite Volumenkonzentration wenigstens 80 %, bevorzugt wenigstens 90 %, besonders bevorzugt wenigstens 95 %, beträgt. Alternativ oder zusätzlich kann die erste Volumenkonzentration höchstens 20 %, bevorzugt höchstens 10 %, besonders bevorzugt höchstens 5 %, betragen.

Ferner wird es bevorzugt, wenn ein durchschnittlicher Durchmesser zumindest oberflächennaher Filamente, insbesondere aller Filamente, einer jeweiligen Endlosfaser geringer oder gleich oder um höchstens 20 %, bevorzugt um höchstens 10 %, größer als eine durchschnittliche maximale Ausdehnung der Partikel in einer Raumrichtung ist. Dies beruht auf der Erkenntnis, dass sich die Trennung bzw. Entmischung hervorragend durch eine Filterwirkung der Filamente realisieren lässt. Dementsprechend kann durch die Abstimmung der durchschnittlichen maximalen Ausdehnung der Partikel auf den durchschnittlichen Durchmesser zumindest der Filamente eine optimale Trennungswirkung erzielt werden.

Alternativ oder zusätzlich können der durchschnittliche Durchmesser der Filamente und die durchschnittliche maximale Ausdehnung der Partikel derart gewählt sein, dass eine Behinderung der Filterwirkung, bildlich gesprochen durch ein Verstopfen der Zwischenräume zwischen unmittelbar benachbarten Filamenten, verhindert wird.

Daneben wird es bevorzugt, wenn die Partikel eine durchschnittliche maximale Ausdehnung von höchstens 40 µm, besonders bevorzugt von höchstens 30 µm, aufweisen. Denn bei zu großen maximalen Ausdehnungen der Partikel ergibt sich zwar eine gute Entmischung, allerdings wirken sich derart große Partikel wiederum nachteilhaft auf die Oberflächengüte des Verbundmaterials aus.

Die Filamente sind typischerweise Glasfasern und/oder Carbonfasern und/oder Polymerfasern und/oder Naturfasern. Die Endlosfasern können Garne, insbesondere mit einer Feinheit von 200 tex bis 600 tex bzw. 1 K bis 3 K, und/oder Rovings, insbesondere mit einer Feinheit von 600 tex bis 2400 tex oder 3 K bis 12 K, und/oder Zwirne und/oder Kammzüge und/oder Bänder sein. Besonders bevorzugt weisen die Endlosfasern eine Feinheit von 600 bis 1600 tex oder 3 K bis 6 K auf. Die Endlosfasern können gewebt, insbesondere mit einer Körperbindung 2/2, und/oder gelegt, insbesondere in 0° und 90° Richtung, und/oder gespreizt, insbesondere in unidirektionaler Richtung, sein. Die Endlosfasern können monoaxial und/oder multiaxial, insbesondere biaxial, angeordnet sein. Das Fasermaterial kann ein Glasfaser-Filamentgewebe (GF-FG) sein. Das Fasermaterial kann ein Glasfaser-Rovinggewebe (GF-RG) sein. Möglich ist auch ein biaxiales Glasfasergelege, insbesondere mit einer Fadenanordnung in 0° und 90° Richtung (GF-GE 0/90). Die Endlosfasern können auch unidirektional angeordnete Kohlenstofffasern (CF-UD) sein.

Hinsichtlich des Matrixmaterials wird es bevorzugt, wenn es einen teilkristallinen Kunststoff, insbesondere Polypropylen und/oder Polyetheretherketon, und/oder einen amorphen Kunststoff, insbesondere Polycarbonat, umfasst oder daraus besteht. Insbesondere bei den stark temperaturabhängigen Materialeigenschaften von schwindungsreichem Polypropylen sind die Vorteile der Erfindung besonders ausgeprägt.

Die Partikel umfassen bevorzugt Glaspartikel, insbesondere Glashohlkörper, und/oder Karbonpartikel und/oder mineralische Partikel und/oder keramische Partikel oder bestehen daraus. Die Partikel können aus einem Erdalkalimetallkarbonat, insbesondere Kalziumkarbonat (CaCO₃), bestehen oder ein solches umfassen. Die Partikel können auch solche mit sehr geringem oder negativen thermischen Ausdehnungskoeffizienten umfassen, was besonders bei einem hohen Volumenanteil des Fasermaterials im Verbundmaterial zweckmäßig ist. Im Hinblick auf eine Verwendung des Verbundmaterials im Leichtbau können die Partikel alternativ oder zusätzlich temperatur- und/oder druckexpandierte Partikel umfassen. Hier wird insbesondere expandiertes Polypropylen oder expandiertes Polystyrol oder expandiertes Polycarbonat, wie von Partikelschäumen bekannt, verwendet. Selbstverständlich kann dabei nichtexpandierbares Polypropylen oder nichtexpandiertes Polystyrol oder nichtexpandierbares Polycarbonat als Matrixmaterial verwendet werden.

Ein besonders günstiges Verbundmaterial kann erreicht werden, wenn das Fasermaterial ein biaxiales Glasfasergelege ist oder umfasst, das Matrixmaterial Polypropylen ist oder umfasst und die Partikel vollständig oder teilweise aus einem Erdalkalimetallkarbonat, insbesondere Kalziumkarbonat, und/oder als gebrochene Partikel, beispielsweise Stein- oder Erdbruch, gebildet sind.

Ein günstiges Verbundmaterial mit einer sehr guten Oberflächengüte kann erreicht werden, wenn das Fasermaterial ein Glasfaser-Filamentgewebe ist oder umfasst, das Matrixmaterial Polycarbonat ist oder umfasst und die Partikel Glashohlkugeln sind oder umfassen.

Ein Verbundmaterial mit hoher Gebrauchstemperatur und einer sehr guten Oberflächengüte, das auch unter extremen Umgebungsbedingungen einsetzbar ist, kann erreicht werden, wenn das Fasermaterial unidirektional angeordnete Kohlestofffasern umfasst, das Matrixmaterial Polyetheretherketon ist oder umfasst und die Partikel Glaskugeln sind oder umfassen.

Im Hinblick auf die Auswahl der Endlosfaser und der Partikel wird es bevorzugt, wenn ein temperaturspezifischer Ausdehnungskoeffizient der Endlosfasern um höchstens 15 %, bevorzugt höchstens 10 %, besonders bevorzugt höchstens 5 %, von einem temperaturspezifischen Ausdehnungskoeffizienten der Partikel abweicht. So gelingt eine besonders gute Anpassung der thermischen Materialeigenschaften im äußeren und im inneren Raumbereich.

Bei den zuvor erwähnten Ausdehnungskoeffizienten des Verbundmaterials bzw. der Endlosfasern bzw. der Partikel und/oder der zeitlichen Ausdehnungsgröße wird es bevorzugt, wenn sich diese auf eine Raumrichtung senkrecht zu einer durch die Erstreckungsrichtungen der Endlosfasern aufgespannten Ebene und/oder auf einen Temperaturbereich zwischen 23 °C und 80 °C oder zwischen -20 °C und 120 °C beziehen. Insbesondere sind diese als mittlere Ausdehnungskoeffizienten bzw. mittlere zeitliche Ausdehnungsgröße definiert. Bei einem hergestellten Verbundmaterial können sie beispielsweise dadurch bestimmt werden, dass eine Probe aus dem Verbundmaterial entnommen und, insbesondere flächenbezogen, mehrere Messungen, bevorzugt wenigstens drei Messungen, des Ausdehnungskoeffizienten bzw. der zeitlichen Ausdehnungsgröße vorgenommen werden, wonach ein arithmetischer Mittelwert dieser Messungen als mittlerer Ausdehnungskoeffizient bzw. als mittlere zeitliche Ausdehnungsgröße bestimmt wird.

Ein besonders weitgehender Angleich der Materialeigenschaften kann erzielt werden, wenn die Partikel zumindest teilweise stoffgleich zu den Endlosfasern sind.

Um besonders vorteilhafte Leichtbaueigenschaften des Verbundmaterials zu erzielen, können die Partikel eine um mindestens 15 %, bevorzugt um mindestens 30 %, besonders bevorzugt um mindestens 50 %, geringe Dichte als das Matrixmaterial aufweisen. Eine derart geringe Dichte lässt sich insbesondere durch die bereits zuvor beschriebene Verwendung von Hohlköpern als Partikel erreichen.

Bevorzugt sind die Partikel im Wesentlichen sphärisch. Sie können beispielsweise ein Aspektverhältnis zwischen 0,75 und 1,25 aufweisen. Sphärische Partikel werden besonders bevorzugt, um eine möglichst isotrope Verbesserung der Materialeigenschaften zu erzielen. Nichtsdestotrotz können im Hinblick auf bestimmte Einsatzzwecke des Verbundmaterials auch nichtsphärische Partikel, beispielsweise plättchen- oder stabförmige Partikel oder gebrochene Partikel, insbesondere Stein- oder Erdbruch, zum Einsatz kommen.

Die Erfindung betrifft ferner ein Verfahren zur Herstellung eines faserverstärkten Verbundmaterials, insbesondere des erfindungsgemäßen Verbundmaterials, mit den Schritten:
- Bereitstellen eines Fasermaterials, das mehrere jeweils aus Filamenten gebildete Endlosfasern aufweist;
- Bereitstellen eines Matrixmaterials aus Kunststoff und einer Menge von Partikeln;
- Zugeben des Matrixmaterials und der Partikel zum Fasermaterial; und
- anschließendes Beaufschlagen des Fasermaterials, des Matrixmaterial und der Partikel mit einem äußeren Druck;
wobei sich das Matrixmaterial und die Partikel während des Zugebens und/oder der Druckbeaufschlagung derart trennen, dass eine erste Volumenkonzentration der Partikel bezogen auf das Matrixmaterial in einem inneren Raumbereich zwischen den Filamenten einer Endlosfaser geringer als eine zweite Volumenkonzentration der Partikel bezogen auf das Matrixmaterial in einem äußeren Raumbereich außerhalb der Filamente wird.

Sämtliche Ausführungen zum erfindungsgemäßen Verbundmaterial lassen sich analog auf das erfindungsgemäße Verfahren übertragen, sodass auch mit diesem die zuvor beschriebenen Vorteile erzielt werden können. Insbesondere können ein zuvor beschriebenes Matrixmaterial und/oder ein zuvor beschriebenes Fasermaterial und/oder zuvor beschriebene Partikel im Rahmen des erfindungsgemäßen Verfahren verwendet werden.

Wie bereits erwähnt, erfolgt die Trennung aufgrund der Filterwirkung der Filamente. Diese liegen typischerweise derart nah beieinander, dass zumindest ein Großteil der Partikel beim Zugeben und/oder der Druckbeaufschlagung nicht in den inneren Raumbereich gelangt. Damit ist jedoch nicht ausgeschlossen, dass einzelne Partikel, z. B. aufgrund unterschiedlicher Größen der Partikel untereinander, dennoch in den inneren Raumbereich gelangen. Insbesondere bei der Verwendung von Hohlkörper umfassenden Partikeln ist es zweckmäßig, wenn das Zugeben und/oder die Druckbeaufschlagung ohne eine Beschädigung der Partikel erfolgt. Das Trennen kann in einem einstufigen Prozessschritt oder in einem mehrstufigen Prozessschritt durch mehrere nacheinander verlaufende Trennvorgänge erfolgen.

Das faserverstärkte Verbundmaterial kann ferner zu einem Halbzeug, beispielsweise zu einem Organoblech aushärten und/oder zu einem Bauteil, beispielsweise zu einem Gehäuse, für den Einsatz im Automobil- oder Flugzeugbau oder als Cosumerware, umgeformt werden.

Bevorzugt umgeben das Matrixmaterial und die Partikel während des Zugebens und/oder der Druckbeaufschlagung eine Endlosfaser, wonach der innere Raumbereich zwischen den Filamenten der Endlosfaser durch das getrennte Matrixmaterial getränkt wird. Der Druck wird bevorzugt derart gewählt, dass eine vollständige Tränkung des inneren Raumbereichs erfolgt. Selbstverständlich kann die Tränkung auch zumindest teilweise aufgrund der Kapillarwirkung der Filamente bereits durch das Zugeben erfolgen.

Vorteilhafterweise ordnen sich die Partikel während des Zugebens und/oder der Druckbeaufschlagung zumindest außerhalb des inneren Raumbereichs, insbesondere an einer äußeren Grenzfläche des Matrixmaterials, an.

Insbesondere im Hinblick auf die Verwendung nichtsphärischer Partikel wird es bevorzugt, wenn sich die Partikel während des Zugebens und/oder der Druckbeaufschlagung inhomogen, insbesondere in eine Raumrichtung senkrecht zu einer durch die Erstreckungsrichtung der Endlosfasern aufgespannten Ebene, anordnen. So lassen sich gezielt anisotrope Materialeigenschaften des Verbundmaterials realisieren.

Insbesondere wenn das Verbundmaterial druck- und/oder temperaturexpandierte Partikel aufweisen soll, kann sich ein Volumen der Partikel bei der Druckbeaufschlagung und/oder einer Temperaturbeaufschlagung um mindestens den Faktor 1,5, bevorzugt um den Faktor 5, besonders bevorzugt um den Faktor 10, gegenüberüber ihrem Volumen bei der Bereitstellung vergrößern. In diesem Zusammenhang werden temperaturexpandierbare Partikel, wie noch nicht expandiertes Polypropylen oder noch nicht expandiertes Polystyrol oder noch nicht expandiertes Polycarbonat, verwendet.

Schließlich wird es bevorzugt, wenn ein das Matrixmaterial und die Partikel umfassendes Gemisch durch Compoundierung erzeugt und zu Fasermaterial zugegeben wird. Typischerweise ist das Gemisch beim, insbesondere quasi-kontinuierlichen und/oder kontinuierlichen, Zugeben fließfähig. Das Gemisch kann insbesondere vor dem Zugeben durch Erwärmung, beispielsweise in einem Direktschmelzeprozess, plastifiziert werden. Alternativ können das Matrixmaterial und die Partikel durch Streuen dem Fasermaterial, typischerweise in nicht-fließfähiger Form, zugegeben werden.

Das Gemisch kann beispielsweise durch Compoundierung in einem Pultrusionsverfahren über einen, insbesondere kontinuierlich laufenden Extruder, erzeugt werden. Das Gemisch kann dann im plastifizierten Zustand auf das Fasermaterial oder um Filamentansammlungen des Fasermaterials pultrudiert werden.

Es wird bevorzugt, wenn das durch Streuen zugegebene Matrixmaterial vor dem Beaufschlagen mit dem äußeren Druck durch eine Temperaturbeaufschlagung und/oder eine Druckbeaufschlagung am Fasermaterial fixiert wird.

Im Rahmen des erfindungsgemäßen Verfahrens kann das Beaufschlagen mit dem äußeren Druck mittels einer, insbesondere quasikontinuierlich arbeitenden, Intervallheißpresse oder mittels einer kontinuierlich arbeitenden Doppelbandpresse erfolgen.
Weitere Vorteile und Einzelheiten der Erfindung ergeben sich aus den folgenden Ausführungsbeispielen so wie anhand der Zeichnungen. Diese sind schematische Darstellungen und zeigen:
- Fig. 1: eine schematische Schnittansicht eines Ausführungsbeispiels eines erfindungsgemäßen faserverstärkten Verbundmaterials;
- Fig. 2: einen vergrößerten Ausschnitt von Fig. 1;
- Fig. 3: eine 25-fach vergrößerte Mikroskopieaufnahme eines Ausführungsbeispiels eines erfindungsgemäßen faserverstärkten Verbundmaterials;
- Fig. 4: einen 200-fach vergrößerten Ausschnitt von Fig. 3; und
- Fig. 5: ein Flussdiagramm eines Ausführungsbeispiels eines erfindungsgemäßen Herstellungsverfahrens.

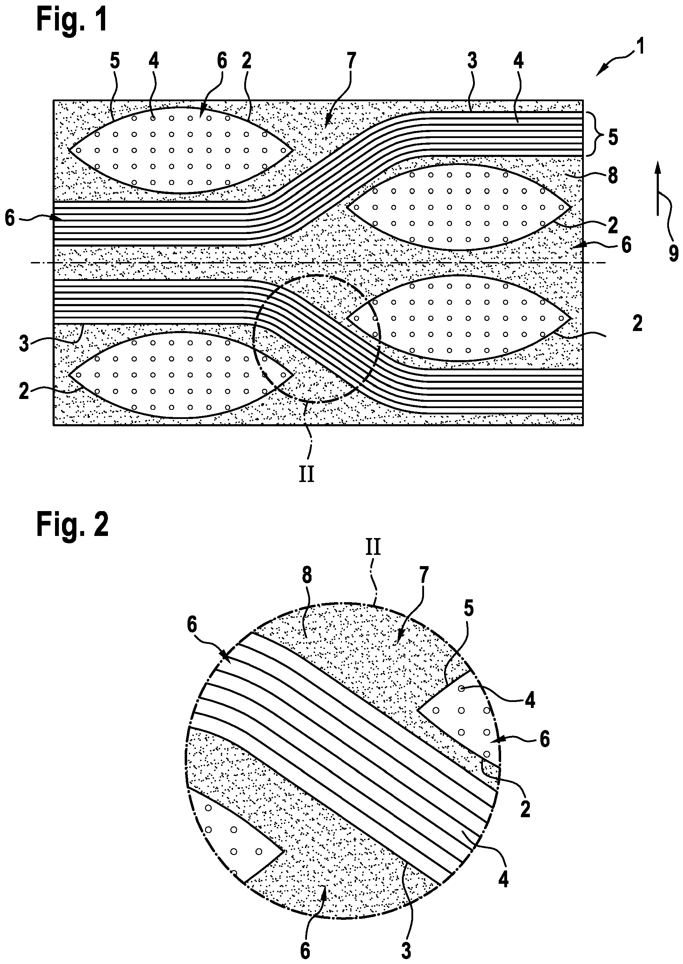

Die Fig. 1 und 2 zeigen eine schematische Schnittansicht eines Ausführungsbeispiels eines faserverstärkten Verbundmaterials 1, wobei Fig. 2 einen Ausschnitt II von Fig. 1 zeigt.

Das Verbundmaterial 1 umfasst ein Fasermaterial aus einer Vielzahl gewebter Endlosfasern 2, 3, wobei die Endlosfasern 2 Schussfäden und die Endlosfasern 3 Kettfäden sind. Alternativ oder zusätzlich sind die Endlosfasern 2, 3 oder Teile von ihnen gelegt und/oder gespreizt. Eine jeweilige Endlosfaser 2, 3 ist dabei aus einer Vielzahl von Filamenten 4 gebildet. Ein Zwischenräume zwischen den Filamenten 4 umfassender innerer Raumbereich 5 ist mit einem Matrixmaterial 6 des Verbundmaterials 1 ausgefüllt, welches auch einen äußeren Raumbereich 7 zwischen den Endlosfasern 2, 3 umgibt. Daneben umfasst das Verbundmaterial 1 eine Menge von Partikeln 8. Das die Endlosfasern 2, 3 umfassende Fasermaterial, das Matrixmaterial 6 und die Partikel 8 können als jeweilige Phasen des Verbundmaterials 1 aufgefasst werden, so dass es auch als 3-Phasen-Verbundmaterial erachtet werden kann.

Die Filamente 4 der Endlosfasern 2, 3 sind Glasfasern mit einem Durchmesser zwischen 15 µm und 25 µm, wobei alternativ oder zusätzlich Carbonfasern mit typischen Durchmessern zwischen 7 µm und 13 µm, Polymerfasern oder Naturfasern unterschiedlichster Durchmesser oder Durchmesserverteilungen verwendet werden können. Die Partikel 8 sind stoffgleich zu den Endlosfasern 2, 3 aus Glashohlkörper gebildet. Durch die Verwendung von Hohlkörpern als Partikel 8 wird eine im Hinblick auf Leichtbauanforderungen des Verbundmaterials vorteilhafte um 50 % geringere Dichte der Partikel 8 im Vergleich zum Matrixmaterial 6 erreicht. Die Partikel 8 haben eine im Wesentlichen sphärische Form, d. h. das Aspektverhältnis eines jeweiligen Partikels liegt zwischen 0,75 und 1,25. Alternativ oder zusätzlich können Carbonpartikel, keramische Partikel oder mineralische Partikel, auch mit größeren Aspektverhältnissen, verwendet werden. In diesem Ausführungsbeispiel weicht jedoch ein temperaturspezifischer Ausdehnungskoeffizient der Endlosfasern 2, 3 um höchstens 5 % von einem temperaturspezifischen Ausdehnungskoeffizienten der Partikel 8 ab. Ein durchschnittlicher Durchmesser der Filamente 4 einer jeweiligen Endlosfaser 2, 3 ist geringer als eine durchschnittliche maximale Ausdehnung der Partikel 8 in einer Raumrichtung.

Das Matrixmaterial 6 ist vorliegend Polypropylen, es können jedoch auch andere teilkristalline Kunststoffe, andere Thermoplaste oder Duroplaste oder Elastomere verwendet werden. Es ist beispielsweise denkbar, dass das Matrixmaterial alternativ oder zusätzlich einen amorphen Kunststoff wie Polycarbonat aufweist.

Eine erste Volumenkonzentration bezogen auf das Matrixmaterial 6 im inneren Raumbereich 5 ist geringer als eine zweite Volumenkonzentration der Partikel 8 bezogen auf das Matrixmaterial 6 im äußeren Raumbereich 7. Die zweite Volumenkonzentration ist so hoch wie möglich realisiert und beträgt vorliegend in etwa 95 %. In den schematischen Darstellungen sind jedoch aus Gründen der Übersichtlichkeit keine Partikel 8 im inneren Raumbereich 5 eingezeichnet, obwohl sich typischerweise eine über das gesamte Volumen des inneren Raumbereichs 5 zu ermittelnde erste Volumenkonzentration von ca. 5 % einstellt. Dabei ist die lokale erste Volumenkonzentration in Abschnitten der äußeren Filamente 4 typischerweise höher als in einem zentralen Abschnitt einer jeweiligen Endlosfaser 2, 3.

Die erste Volumenkonzentration und zweite Volumenkonzentration sind derart gewählt, dass ein temperaturspezifischer Ausdehnungskoeffizient des Verbundmaterials 1 im inneren Raumbereich 5 um höchstens 5 % von einem temperaturspezifischen Ausdehnungskoeffizienten des Verbundmaterials im äußeren Raumbereich 7 abweicht. Ferner sind die erste Volumenkonzentration und die zweite Volumenkonzentration derart gewählt, dass eine ein viskoelastisches Ausdehnungsverhalten beschreibende zeitliche Ausdehnungsgröße des Verbundmaterials 1 im inneren Raumbereich 5 um höchstens 5 % von einer entsprechenden zeitlichen Ausdehnungsgröße des Verbundmaterials im äußeren Raumbereich 7 abweicht.

Die Ausdehnungskoeffizienten des Verbundmaterials 1, der Endlosfasern 2, 3 und der Partikel 8 sowie die zeitliche Ausdehnungsgröße sind dabei auf eine Raumrichtung (repräsentiert durch einen Pfeil 9) senkrecht zu einer durch die Erstreckungsrichtungen der Endlosfaserns 2, 3 aufgespannten Ebene und auf einen Temperaturbereich zwischen 23 °C und 80 °C bezogen. Sie sind als mittlere Ausdehnungskoeffizienten bzw. mittlere zeitliche Ausdehnungsgröße definiert und werden dadurch bestimmt, dass eine Probe aus dem Verbundmaterial entnommen und flächenbezogen mehrere Messungen, bevorzugt wenigstens drei Messungen, des Ausdehnungskoeffizienten bzw. der zeitlichen Ausdehnungsgröße vorgenommen werden, wonach ein arithmetischer Mittelwert dieser Messungen als mittlerer Ausdehnungskoeffizient bzw. als mittlere zeitliche Ausdehnungsgröße bestimmt wird.

Das zuvor beschriebene Verbundmaterial 1 zeichnet sich dadurch aus, dass seine thermischen und mechanischen Materialeigenschaften im inneren Raumbereich 5 und im äußeren Raumbereich 7 im Wesentlichen derart aneinander angepasst sind, dass sich bei einer Erwärmung oder einer Veränderung über die Zeit aufgrund des viskoelastischen Verhaltens beide Raumbereiche 5, 7 gleichartig ausdehnen. Dies wird durch die höhere zweite Konzentration der Partikel 8 im äußeren Raumbereich 7 erzielt. Da die Endlosfasern 2, 3 und die Partikel 8 stoffgleich sind und eine Volumenkonzentration der Endlosfasern 2, 3 bezogen auf das Matrixmaterial 6 im inneren Raumbereich 5 der zweiten Volumenkonzentration im Wesentlichen entspricht, wird dieses gleichartige thermische und zeitliche Ausdehnungsverhalten erreicht. So wird über die gesamte Lebensdauer der sog. Telegraphing-Effekt, der sich in einem Abzeichnen textiler Strukturen der Endlosfasern 2, 3 auf einer Oberfläche des Verbundmaterials 1 äußert, erheblich reduziert oder gänzlich vermieden.

Es ist zu beachten, dass bei einer nicht stoffgleichen Auswahl der Endlosfasern 2, 3 und der Partikel 8 die Volumenkonzentration der Endlosfasern 2, 3 nicht notwendigerweise der zweiten Volumenkonzentration entsprechen muss. In diesem Fall sind vielmehr die jeweiligen Materialeigenschaften der Endlosfasern 2, 3 und der Partikel 8 zu berücksichtigen und sich im fertigen Verbundmaterial 1 einstellende Volumenkonzentrationen zu wählen, die die vorgenannten Materialeigenschaften realisieren.

Gemäß einem weiteren, nicht gezeigten Ausführungsbeispiel eines Verbundmaterials, welches im Wesentlichen dem zuvor beschriebenen Ausführungsbeispiel entspricht, sind bestehen die Partikel aus expandiertem Polypropylen oder expandiertem Polystyrol oder expandiertem Polycarbonat. Dabei wird als Matrixmaterial weiterhin ein nichtexpandierter Kunststoff, insbesondere nichtexpandiertes Polypropylen, beigemischt und verwendet. Bei diesem Ausführungsbeispiel ist zu beachten, dass die aus dem Matrixmaterial gebildete Phase und die aus den Partikel gebildete Phase gegebenenfalls aufgrund der Materialidentität nicht mehr scharf gegeneinander abgrenzbar sein können.

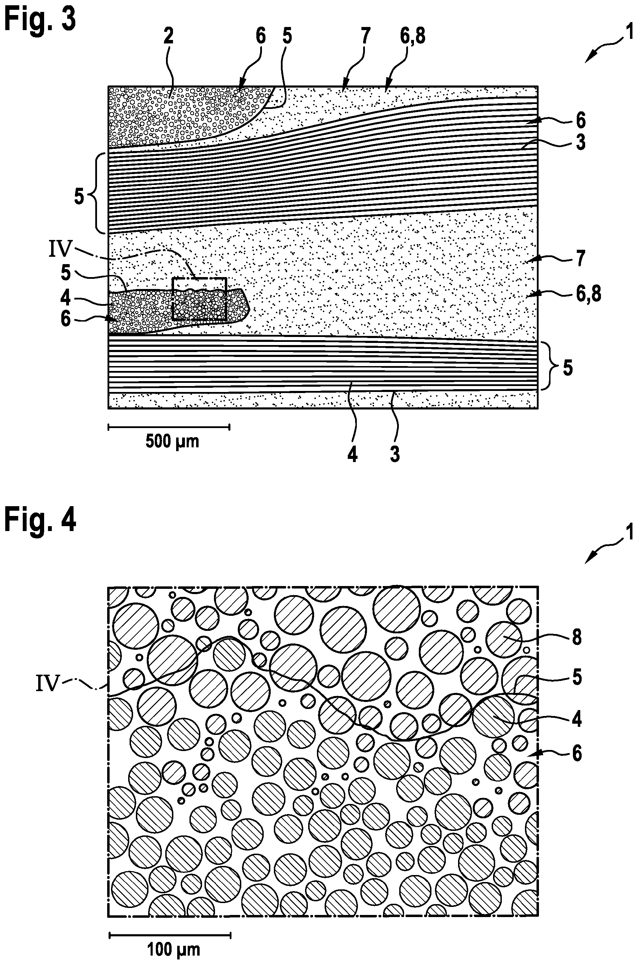

Die Fig. 3 und 4 zeigen Mikroskopieaufnahmen eines weiteren Ausführungsbeispiels eines Verbundmaterials 1, wobei Fig. 3 eine 25-fache Vergrößerung und Fig. 4 eine 200-fache Vergrößerung eines Ausschnitts IV zeigt. Das Ausführungsbeispiel einspricht im Wesentlichen dem in den Fig. 1 und 2 Gezeigten.

Ersichtlich sind der innere Raumbereich 5 und der äußere Raumbereich 7 mit dem Matrixmaterial 6 getränkt. Eine hohe Volumenkonzentration der Partikel 8 bezogen auf das Matrixmaterial 6 ist hingegen lediglich im äußeren Raumbereich 7 vorhanden. Wie Fig. 4 nochmals verdeutlicht, ist der durchschnittliche Durchmesser der Filamente 4 geringer als der durchschnittliche Durchmesser der Partikel 8. Gemäß weiteren Ausführungsbeispielen ist der durchschnittliche Durchmesser der Filamente 4 auch gleich dem durchschnittlichen Durchmesser der Partikel 8 oder um höchstens 20 % größer als der durchschnittliche Durchmesser der Partikel 8.

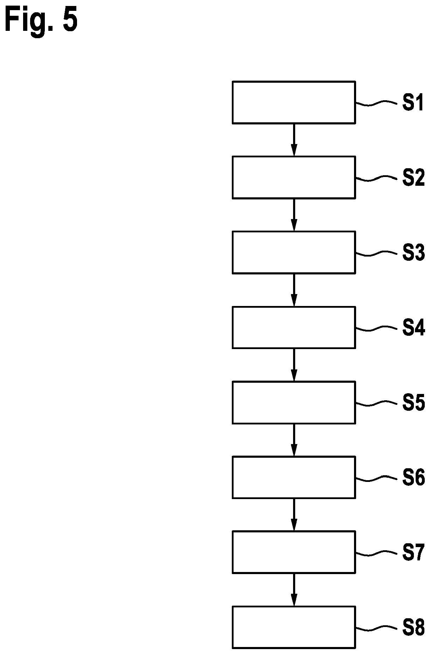

Fig. 5 ist ein Flussdiagramm eines Ausführungsbeispiels eines Verfahren zur Herstellung eines Verbundmaterials 1 nach einem der vorgenannten Ausführungsbeispiele. Die im Folgenden verwendeten Bezugszeichen entsprechen dabei den in den vorgenannten Ausführungsbeispielen verwendeten Bezugszeichen.

In einem ersten Schritt S1 wird ein Fasermaterial, das die jeweils aus Filamenten 4 gebildeten Endlosfasern 2, 3 aufweist, bereitgestellt. In einem folgenden Schritt S2 wird durch Compoundierung ein Gemisch aus Partikeln 8 und einem Matrixmaterial 6 erzeugt und durch Erwärmung plastifiziert. Anschließend wird das Gemisch in einem Schritt S3 bereitgestellt. Als Endlosfasern 2, 3, Matrixmaterial 6 und Partikel 8 können die in den zuvor genannten Ausführungsbeispielen genannten Materialien verwendet werden.

In einem folgenden Schritt S4 wird das Fasermaterial in eine Pressvorrichtung, beispielsweise in eine Intervallheißpresse, eine Doppelbandpresse oder eine statische Presse, eingelegt. In einem folgenden Schritt S5 wird das Gemisch dem Fasermaterial zugegeben. Anschließend werden in einem Schritt S6 das Fasermaterial und das Gemisch durch die Pressvorrichtung mit einem äußeren Druck beaufschlagt. Dabei ist der angewendete Druck derart bemessen, dass es zu keiner Beschädigung der Partikel 8 kommt, insbesondere wenn diese Hohlkörper umfassen.

Während des Zugebens im Schritt S5 wird bereits ein innerer Raumbereich 5 zwischen den Filamenten 4 aufgrund deren Kapillarwirkung durch das Matrixmaterial 6 getränkt. Durch die Druckbeaufschlagung im Schritt S6 wird dieser Tränkungsvorgang weiter verstärkt. In den Schritten S5 und S6 trennen sich zudem die Partikel 8 aufgrund der Filterwirkung der, insbesondere äußeren, Filamente 4 derart, dass eine erste Volumenkonzentration der Partikel 8 bezogen auf das Matrixmaterial 6 im inneren Raumbereich 5 geringer als eine zweite Volumenkonzentration der Partikel 8 bezogen auf das Matrixmaterial 6 von 95 % oder mehr in einem äußeren Raumbereich 7 außerhalb der Filamente 4 entsteht. Dadurch ordnen sich die Partikel 8 zu einem Großteil außerhalb des inneren Raumbereichs 5, vor allem an einer äußeren Grenzfläche des Matrixmaterials 6, an. Bei einer Verwendung von sphärischen Partikeln 8 kommt es zu einer im Wesentlichen makroskopisch homogenen Verteilung der Partikel 8. Bei einer Verwendung von nichtsphärischen Partikeln 8 können sich diese inhomogen in einer Raumrichtung senkrecht zu einer durch die Erstreckungsrichtung der Endlosfasern 2, 3 (vgl. den Pfeil 9) aufgespannten Ebene anordnen.

In Hinblick auf diese Anordnung der Partikel 8 werden die Endlosfasern 2, 3, das Matrixmaterial 6 und die Partikel 8 in den Schritten S1 und S3 derart gewählt, dass ein temperaturspezifischer Ausdehnungskoeffizient des hergestellten Verbundmaterials 1 im inneren Raumbereich 5 um höchstens 5 % von einem temperaturspezifischen Ausdehnungskoeffizienten des hergestellten Verbundmaterials 1 im äußeren Raumbereich 7 abweicht. Ferner erfolgt die Auswahl derart, dass eine ein viskoelastisches Ausdehnungsverhalten des Verbundmaterials 1 beschreibende zeitliche Ausdehnungsgröße des hergestellten Verbundmaterials 1 im inneren Raumbereich 5 um höchstens 5 % von der zeitlichen Ausdehnungsgröße des hergestellten Verbundmaterials 1 im äußeren Raumbereich 7 abweicht.

In einem anschließenden Schritt S7 härtet das so erhaltene Verbundmaterial 1 zu einem modifizierten Organoblech aus und wird in einem folgenden Schritt S8 zu einem Bauteil, beispielsweise einem Gehäusedeckel, umgeformt.

Gemäß einem weiteren Ausführungsbeispiel des Herstellungsverfahrens, welches dem vorgenannten Ausführungsbeispiel entspricht, wird das Gemisch im Schritt S2 aus Partikeln 8, die Partikel aus einem expandierbaren Kunststoff wie expandierbarem Polypropylen umfassen, und dem Matrixmaterial 6 gebildet. Während des Schritts S6 erfolgt eine zusätzliche Temperaturbeaufschlagung, aufgrund welcher die Partikel 8 in Zusammenwirkung mit der Druckbeaufschlagung expandieren. Dabei vergrößert sich das Volumen der nunmehr expandierten Partikel 8 gegenüber ihrem Volumen im Gemisch mindestens um einen Faktor 10.

Gemäß einem weiteren Ausführungsbeispiel des Herstellungsverfahrens, welches einem dem vorgenannten Ausführungsbeispiel entspricht, werden die Schritte S4 und S5 in umgekehrter Reihenfolge durchgeführt.

Gemäß einem weiteren Ausführungsbeispiel des Herstellungsverfahrens, welches einem dem vorgenannten Ausführungsbeispiel entspricht, wird der Schritt S2 ausgelassen und das Gemisch durch eine Streuvorrichtung im Schritt S5 dem Fasermaterial zugegeben.

Im Folgenden werden weitere Ausführungsbeispiele des faserverstärkten Verbundmaterials und des Herstellungsverfahrens beschrieben, welche auf den zuvor beschriebenen Ausführungsbeispielen basieren:

### Ausführungsbeispiel A

Gemäß einem Ausführungsbeispiel A ist das Matrixmaterial Polypropylen (PP), die Partikel sind aus Kalziumkarbonat (CaCO₃) gebildet und das Fasermaterial ist ein biaxiales Glasfasergelege (GF-GE 0/90) in Form eine Rovinggeleges mit einer Fadenfeinheit zwischen 600 und 2400 tex. Das Verbundmaterial ist im unteren Preissegment angesiedelt und weist erheblich verbesserte visuelle und mechanische Materialeigenschaften gegenüber entsprechenden konventionellen Verbundmaterialien ohne Partikel auf.

PP zeichnet sich bei einer Dichte von ca. 0,90 bis 0,92 g/cm³ und einem Marktpreis zwischen 0,75 und 1,50 €/kg als kostengünstige, polymere Leichtbaualternative aus, weist aber mit einem E-Modul von ca. 1,5 GPa und einer Festigkeit von ca. 25 MPa geringe mechanische Eigenschaften auf. Der Schmelzpunkt ist mit ca. 150 bis 180 °C niedrig. CaCO₃ ist mit Preisen zwischen 0,10 und 0,35 €/kg günstiger als PP, ist aber im Vergleich mit einer Dichte von ca. 2,5 bis 2,9 g/cm³ schwerer und besitzt im Rohzustand (Pulverform) auch kaum mechanische Stabilität. Endlosglasfasergelege auf Rovingbasis sind mit Preisen zwischen 1,50 und 5,00 €/m² bei einem Flächengewicht zwischen 300 und 800 g/m² teurer als das Matrixmaterial und die Partikel. Allerdings sind solche Fasermaterialien im Vergleich zu speziellen oberflächenoptimierten Glasfaserfeingeweben mit Preisen zwischen 8,00 und 20,00 €/m² bei einem Flächengewicht zwischen 100 und 300 g/m² relativ kostengünstig. Das Fasermaterial ist mit einer Dichte zwischen 2,5 und 2,6 g/cm³ ähnlich schwer wie Kalziumkarbonat, hat aber mit einem Zug-E-Modul zwischen ca. 70 bis 90 GPa und einer Zugfestigkeit zwischen ca. 1800 bis 5000 MPa wesentliche bessere mechanische Kennwerte im Vergleich zu PP und CaCO₃.

Betrachtet man die Materialeigenschaften von Matrix- und Fasermaterial in diesem Ausführungsbeispiel, so zeigt PP mit ca. 130 µm)/m°C im Vergleich zum Fasermaterial mit ca. 5 µm/m°C einen wesentlich höheren thermischen Ausdehnungskoeffizienten bei Raumtemperatur. Im inneren Raumbereich des Verbundmaterials stellt sich bei einer Volumenkonzentration der Filamente von 45 Vol.-% ein Ausdehnungskoeffizient quer zur Faserrichtung von ca. 30 µm/m°C ein, so dass sich beim konventionellen Verbundmaterial ohne Partikel die Ausdehnungskoeffizienten von PP und imprägnierten Fasermaterial um ca. 100 µm/m°C unterscheiden. Als Folge des stark unterschiedlichen Ausdehnungsverhaltens schwinden Matrixmaterial und Fasermaterial beim konventionellen Verbundmaterial bei Herstellung und Weiterverarbeitung unterschiedlich stark und es kommt zu Abzeichnungen textiler Struktur an matrixreichen Stellen auf der Oberfläche. Begründet wird dieser Effekt dadurch, dass das teilkristalline PP aufgrund der molekularen Struktur wesentlich höhere Temperaturabhängigkeiten im Einsatzbereich zwischen -20 und +100 °C besitzt, wodurch sich Volumenänderungen in Zonen mit hohem Anteil des Matrixmaterials, also in einem äußeren Raumbereich deutlich massiver auswirken, als in Zonen mit erhöhten Anteil des Fasermaterials, also im inneren Raumbereich.

Ziel des Ausführungsbeispiels A ist es, die temperaturabhängigen Ausdehnungsunterschiede von Matrixmaterial und Fasermaterial durch Zugabe von CaCO₃ so anzugleichen, das makroskopisch gesehen ein homogeneres Ausdehnungsverhalten quer zur Faserrichtung, also senkrecht zur Textilebene, entsteht. Das Durchzeichnen der textilen Struktur kann so erheblich reduziert werden, sodass das Verbundmaterial verbesserte Oberflächeneigenschaften, zum Beispiel für dekorierte Anwendungen, aufweist. CaCO₃ besitzt bei Raumtemperatur einen thermischen Ausdehnungskoeffizienten von ca. 10 µm/m°C, so dass in einem Verbund mit PP ein relativ hoher Anteil von wenigstens 75 Vol.-% notwendig wäre, um den sich ergebenden Ausdehnungskoeffizienten eines compoundierten Gemisches aus PP und CaCO₃ vollständig an den Ausdehnungskoeffizienten des imprägnierten Fasermaterials im inneren Raumbereich anzugleichen.

Zur Herstellung des Verbundmaterials wird das Fasermaterial bereitgestellt (Schritt S1). Mittels Compoundierung wird ein Gemisch aus PP und CaCO₃ erzeugt und anschließend über einen Direktschmelzeprozess durch ein Plastifizieraggregat aufgeschmolzen (Schritt S2) und bereitgestellt (Schritt S3). Das Fasermaterial wird in eine Pressvorrichtung in Form einer quasi-kontinuierlich arbeitenden Intervallheißpresse eingelegt (Schritt S4). Das Gemisch wird zwischen zwei Lagen Glasfaserverstärkungsgelege diskontinuierlich aufgetragen (Schritt S5). Das Fasermaterial und das Gemisch werden mittels der Pressvorrichtung über ein definiertes Druck-Temperatur-Zeitprofil mit Druck und Temperatur beaufschlagt, mit anderen Worten verpresst (Schritt S6). Beim Verpressen kommt es bei einer Imprägnierung des Fasermaterials mit PP zur Entmischung und damit zur Erhöhung einer zweiten Volumenkonzentration der Partikel bezogen auf das Matrixmaterial im äußeren Raumbereich. Durch die Imprägnierung wird eine Anhäufung von CaCO₃-Partikeln im äußeren Raumbereich mit einer makroskopisch homogenen Volumenanteil der Partikel von ca. 60-65 Vol.-% erzielt, so dass im äußeren Raumbereich im Wesentlichen homogene thermische Materialeigenschaften entstehen.

Das entstehende Verbundmaterial weist nun senkrecht zur Erstreckungsrichtung der Filamente im äußeren Raumbereich eine schwindungsreduzierte Compound-Zone außerhalb der imprägnierten Endlosfasern auf, die im Temperaturbereich zwischen -20 °C und 100°C das gegenläufige Ausdehnungsverhalten der Verbundpartner im Vergleich zu einem konventionellen Verbundmaterial ohne Partikel deutlich vermindert. Da das Matrixmaterial im Vergleich zum Fasermaterial einen vergleichsweisen hohen, stark temperaturabhängigen Ausdehnungskoeffizienten (Δα ∼ 100 µm)/m°C) aufweist, wäre zur vollständigen Angleichung ein sehr hoher Anteil an CaCO₃ im Gemisch nötig. Besonders einfach ist ein Anteil von bis zu 50 Vol.-% CaCO₃ im Gemisch aus PP und CaCO₃ im Direktschmelzeprozess verarbeitbar. Das Verbundmaterial weist bei einem solchen Anteil jedoch bereits eine erheblich verbesserte Oberflächengüte im Vergleich zum konventionellen Verbundmaterial auf, ist aber nicht vollständig eben. Dies ist jedoch durch Dekorationsprozesse, welche eine verbleibende Resttextur ausgleichen können, bei einer Weiterverarbeitung ausgleichbar.

Die sich einstellende Topographie des Verbundmaterials kann über flächenhafte Oberflächenmesstechnik aufgezeigt werden. In der DIN ISO EN 25 178 sind verschiedene Merkmale beschrieben, welche die erzielten Verbesserungen veranschaulichen können. So kann beispielsweise über konfokale Lasermikroskopie nachgewiesen werden, dass für eine maximale Höhe S_{z} und für eine mittlere arithmetische Höhe Sₐ der skalenbegrenzenden Oberfläche eine Verbesserung von mehr als 70 % für das Verbundmaterial bei den 50-prozentigen Anteil von CaCO₃ möglich ist. Dabei verbessern sich S_{z} von ca. 35 µm beim konventionellen Verbundmaterial auf unter 10 µm im vorliegenden Ausführungsbeispiel und Sₐ von 2,0 µm beim konventionellen Verbundmaterial auf 0,7 µm im vorliegenden Ausführungsbeispiel in einem Wellenlängenbereich von
0,1 mm < *λ_{kurz}* < 1 mm < *λ_{lang}* < 30mm.

### Ausführungsbeispiel B

Gemäß dem Ausführungsbeispiel B des Verbundmaterials ist das Matrixmaterial Polycarbonat (PC), die Partikel sind Glashohlkugeln (GHK) und das Fasermaterial ist ein Glasfaser-Filamentgewebe (GF-FG) mit Körperbindung 2/2 mit einer Feinheit von etwa 300 tex. Das Verbundmaterial ist im mittleren Preissegment angesiedelt, wobei die Partikel durch ihre geringe Dichte zum Leichtbaupotential des Verbundmaterials beitragen.

PC ist ein technischer Polymerwerkstoff mit einer Dichte von ca. 1,2 g/cm³ und einem Marktpreis zwischen 2,00 und 3,50 €/kg. Der E-Modul liegt mit ca. 2,5 GPa bei einer Festigkeit von ca. 65 MPa im mittleren Segment der mechanischen Eigenschaften üblicher thermoplastischer Polymere, wobei die Wärmeformbeständigkeit mit ca. 125 °C vergleichsweise im mittleren Bereich liegt. Glashohlkugeln sind im Vergleich zu CaCO₃ als Partikel mit Preisen von 6 bis 8 € je Liter wesentlich teurer, weisen aber mit 0,46 g/cm³ eine sehr geringe Dichte auf und sind geometrisch gesehen praktisch ideal rund, was den textilen Filtereffekt begünstigt. Die mechanische Belastbarkeit von Glashohlkugeln ist sehr gut, beispielsweise ist die isostatische Druckfestigkeit bei ausgewählten Typen größer 1000 bar. Durch die deutlich feineren Filamente des Fasermaterials und das geringere Flächengewicht von < 300 g/m² weist das Verbundmaterial im Vergleich zum Ausführungsbeispiel A durch weniger Ondulationshöhe eine geringere Oberflächentextur auf. Der Zug-E-Modul des Fasermaterials beträgt ca. 60 bis 80 GPa und seine Zugfestigkeit ca. 1500 bis 4000 MPa. Diese Werte sind nur unwesentlich geringer als das Glasfaserrovinggelege im Ausführungsbeispiel A. Allerdings ist das Fasermaterial dieses Ausführungsbeispiels aufgrund des erhöhten Webaufwandes mit einem Preis zwischen 5,00 und 12,00 €/m² deutlich teurer.

PC hat bei Raumtemperatur einen thermischen Ausdehnungskoeffizienten von ca. 65 µm/m°C - im Vergleich zum PP des Ausführungsbeispiels A damit einen deutlich geringeren, annährend halb so hohen Wert. Das Fasermaterial hingegen hat aufgrund der analogen Werkstoffart des Glases den gleichen thermischen Ausdehnungskoeffizienten von ca. 5 µm/m°C bezogen auf das Ausführungsbeispiel A. Im direkten Vergleich zwischen PC und Fasermaterial ist der thermische Ausdehnungskoeffizient immer noch um ca. 60 µm/m°C unterschiedlich.

Im inneren Raumbereich erhöht sich der thermische Ausdehnungskoeffizient quer zur Faserrichtung bei einer Volumenkonzentration der Filamente von ca. 45 Vol.-% auf ca. 20 µm/m°C, wodurch sich die thermische Ausdehnung bei einem konventionellen Verbundmaterial ohne Partikel immer noch um etwa 45 µm)/m°C unterscheidet. Aufgrund der molekularen Struktur des amorphen PC sind die Temperaturabhängigkeiten im Einsatzbereich zwischen -20 und +100 °C im Vergleich zum PP geringer, wodurch sich thermisch bedingte Volumenänderungen im äußeren Raumbereich weniger massiv auswirken als im inneren Raumbereich. Die Oberflächengüte des konventionellen Verbundmaterials wird also sowohl durch die feinere Faden- bzw. Webart, als auch durch das verminderte Ausdehnungsverhalten des PC im Vergleich zu einem konventionellen Verbundmaterial mit einem Fasermaterial und einem Matrixmaterial entsprechend dem Ausführungsbeispiel A verbessert sein, wenn gleich nach der Herstellung und/oder Weiterverarbeitung immer noch eine mit bloßem Auge erkennbare Oberflächentextur verbleibt.

Ziel des Ausführungsbeispiels B ist es, die temperaturabhängigen Ausdehnungsunterschiede Matrixmaterial und Fasermaterial durch Zugabe der Glashohlkugeln so anzugleichen, dass makroskopisch gesehen ein möglichst exakt homogenes Ausdehnungsverhalten quer zur Faserrichtung, hier also senkrecht zur Textilebene, entsteht. Die sich bei dem konventionellen Verbundmaterial abzeichnende textile Struktur soll also praktisch vollkommen eliminiert werden, um eine wellenfreie, lackierfähige Sichtoberfläche zu erzeugen.

Glashohlkugeln besitzen bei Raumtemperatur einen Ausdehnungskoeffizienten von ca. 5 µm/m°C, so dass im äußeren Raumbereich ein Volumenanteil von etwa 67 Vol.-% GHK notwendig ist, um den sich einstellenden, thermischen Ausdehnungskoeffizienten in den Raumbereichen aneinander anzupassen. Da ein solcher Partikelvolumenanteil durch Entmischung des Gemisches unter Kenntnis der dafür notwenigen Ausgangsvolumenverhältnisse mit einem Herstellungsverfahren entsprechend dem Ausführungsbeispiel A erzielbar ist, kann die beim konventionellen Verbundmaterial durch dessen Fasermaterial entstehende Oberflächentextur in diesem Ausführungsbeispiel praktisch vollständig ausgeglichen werden.

Zur Herstellung des Verbundmaterials wird das Fasermaterial bereitgestellt (Schritt S1). Das Gemisch wird in Form eines homogenen Pulvergemischs bestehend aus PC und Glashohlkugeln, welches zuvor mittels Einwaage mengenmäßig abgestimmt wurde, bereitgestellt (Schritt S3). Das Gemisch wird über einen Pulver-Streuprozess auf eine Lage des Fasermaterials flächenhaft gleichmäßig verteilt (Schritt S5). Zur Fixierung des Gemischs auf der Lage wird das Polymer über Temperatur angeschmolzen und/oder über Druck einseitig leicht angebunden. Das Fasermaterial mit dem fixierten Gemisch wird mehrlagig in eine Pressvorrichtung in Form einer Doppelbandpresse eingelegt bzw. gestackt (Schritt S4) und durch die Pressvorrichtung kontinuierlich verpresst (Schritt S6). Im Pressprozess kommt es unter Wahl geeigneter Prozessparameter zur Entmischung und Tränkung des Fasermaterials mit dem reinen PC. In Folge der Entmischung kommt es zur Erhöhung und im Wesentlichen makroskopisch homogenen Verteilung der Partikel im äußeren Raumbereich. Auf diese Weise kann während der Herstellung der Volumenanteil der Partikel von ursprünglich ca. 42 Vol.-% im Gemisch auf etwa 67 Vol.-% im äußeren Raumbereich erhöht und damit eine Angleichung des temperaturabhängigen Materialverhaltens des Verbundmaterials in transversaler Richtung erzielt werden.

Das entstehende Verbundmaterial weist nun senkrecht zur Erstreckungsrichtung der Endlosfasern schwindungsangepasste Compound-Zonen im äußeren Raumbereich auf, die im Temperaturbereich zwischen -20 °C und 100°C im Wesentlichen das gleiche Ausdehnungsverhalten wie der innere Raumbereich aufweisen, was gleichsam im Wesentlichen homogene Materialeigenschaften des Verbundmaterials in transversaler Richtung ermöglicht. Der entstehende Verbund besitzt eine Oberflächengüte ohne lokale Einfallstellen und ist damit auch bei Temperaturwechselbelastung eben.

Die Topographie kann über einfache Streifenlichtaufnahmen nachgewiesen werden. Ebenso können auch flächenhafte Oberflächenmesstechniken auf Basis von Streifenlicht oder analog Ausführungsbeispiel A verwendet werden. So konnte beispielsweise eine Verbesserung der maximalen Höhe S_{z} der skalenbegrenzenden Oberfläche von ca. 15 µm beim konventionellen Verbundmaterial auf weniger als 2 µm beim Verbundmaterial dieses Ausführungsbeispiels nachgewiesen werden, wobei die verbleibende äußerst geringe Restwelligkeit auf andere Ursachen wie die Struktur einer abzuformenden Stahloberfläche oder Defekte durch Lufteinschlüsse zurückzuführen sind.

### Ausführungsbeispiel C

Gemäß dem Ausführungsbeispiel C des Verbundmaterials ist das Matrixmaterial Polyetheretherketon (PEEK), die Partikel sind Glaskugeln (GK) und das Fasermaterial weist unidirektional angeordnete, gespreizte Kohlenstofffasern (CF-UD) auf. Das Verbundmaterial ist im Hochpreissegment angesiedelt, wobei das PEEK durch die sehr hohe Dauergebrauchstemperatur zum Einsatz unter extremen Umgebungsbedingungen und das Fasermaterial durch die sehr hohe Festigkeit deutlich zum Leichtbaupotential des Gesamtverbundes beitragen.

Ein konventionelles Verbundmaterial mit dem vorgenannten Matrixmaterial und dem vorgenannten Fasermaterial ohne Partikel wird in der Fachsprache auch als "thermoplastisches Tape" bezeichnet. PEEK ist mit einer Dichte von ca. 1,4 g/cm³ und einem Marktpreis zwischen 15,00 und 150,00 €/kg ein Hochleistungskunststoff (hochtemperaturstabiler Polymerwerkstoff). Der E-Modul liegt mit ca. 5 GPa bei einer Festigkeit von ca. 100 MPa im oberen Segment der mechanischen Eigenschaften üblicher thermoplastischer Polymere, wobei die Wärmeformbeständigkeit mit ca. 250 °C im polymeren Umfeld extrem hoch ist. Glaskugeln sind im Vergleich zu Glashohlkugeln als Füllstoff mit Preisen von 2 bis 3 €/kg günstiger, weisen mit ca. 2,5 g/cm³ aber eine höhere Dichte auf. Glaskugeln sind geometrisch gesehen praktisch ideal rund, was den Filtereffekt begünstigt. Die mechanische Belastbarkeit von GK ist gegenüber GHK erhöht, was die Verarbeitung mit Hochleistungspolymeren ermöglicht. Um den textilen Oberflächeneinfluss zusätzlich zu reduzieren kommt in diesem Ausführungsbeispiel eine unidirektionale Anordnung von Kohlenstofffasern zum Einsatz. Bei dieser Verstärkungsform werden die Endlosfasern bei der Herstellung gespreizt und nicht mehr gelegt oder verwebt, so dass keine Ondulationen vorhanden sind und die Faserverteilung sehr gleichmäßig ist, was zu einer noch geringeren Oberflächentextur als beim Ausführungsbeispiel B führt. Zudem kann das mechanische Potential aufgrund der gestreckten Fasern optimal genutzt werden, so dass beispielsweise der Zug-E-Modul von HT-Kohlenstofffasern von ca. 230 GPa und die Zugfestigkeit von ca. 3500 MPa zu sehr guten mechanischen Eigenschaften des Verbundmaterials bzw. eines daraus hergestellten Bauteils führen können.

Betrachtet man die Materialeigenschaften von Matrixmaterial und Fasermaterial, so zeigt PEEK bei Raumtemperatur mit einem Ausdehnungskoeffizienten von ca. 45 µm)/m°C im Vergleich zu PC im Ausführungsbeispiel B einen noch geringeren Wert im polymeren Milieu. Im Vergleich zu Glasfasern ist der thermische Ausdehnungskoeffizient bei Kohlenstoffasern mit ca. 15 µm)/m°C quer zur Faserrichtung höher. Im inneren Raumbereich imprägnierter Filamente bewegt sich der thermische Ausdehnungskoeffizient bei einem Volumenanteil der Filamente von ca. 55 Vol.-% quer zur Faserrichtung bei ca. 20 µm/m°C, so dass sich beim konventionellen Verbundmaterial ohne Partikel die Ausdehnungskoeffizienten immer noch um etwa 25 µm/m°C unterscheiden. Aufgrund der molekularen Struktur des teilkristallinen PEEK und der sehr hohen Wärmeformbeständigkeit sind die Temperaturabhängigkeiten im Einsatzbereich zwischen -20 und +200 °C im Vergleich zum PC geringer, wodurch sich Volumenänderungen in Zonen mit hohem Anteil des Matrixmaterials nochmals weniger massiv auswirken, als in Zonen hohem Anteil des Fasermaterials. Die Oberflächengüte eines konventionellen Verbundmaterials bzw. thermoplastischen Tapes dieser Materialkombination wird also sowohl durch die geringeren Filamentdurchmesser, durch die unidirektionale, gespreizte Ausrichtung der Filamente als auch durch die geringere Ausdehnung des Matrixmaterials im Vergleich zu einem konventionellen Verbundmaterial mit dem Matrixmaterial und dem Fasermaterial gemäß Ausführungsbeispiel B verbessert sein, wenn gleich nach der Herstellung und/oder Weiterverarbeitung durch nicht ideale Filamentlagen oder Filamentverschiebungen sowie Matrixanhäufungen immer noch eine erkennbare Oberflächentextur verbleibt.

Ziel des Ausführungsbeispiels C ist es, die durch nicht ideale Filamentlage oder Filamentverschiebungen entstehenden Martixanhäufungen und die damit verbundenen temperaturabhängigen, thermischen Ausdehnungsunterschiede von Matrixmaterial und Fasermaterial durch Zugabe von Glaskugeln so anzugleichen, dass makroskopisch gesehen ein nahezu exakt homogenes Ausdehnungsverhalten quer zur Faserrichtung, hier also senkrecht zur Tapeebene, entsteht. Im Verbundmaterial sollen Matrixanhäufungen nicht eliminiert, sondern vielmehr mit einem Compound der Partikel gefüllt werden, um eine wellenfreie Hochglanz-Sichtoberfläche zu erzeugen. Glaskugeln besitzen bei Raumtemperatur einen Ausdehnungskoeffizienten von ca. 6 µm)/m°C, so dass im äußeren Raumbereich ein Volumenanteil von etwa 30 bis 35 Vol.-% Glaskugeln notwendig ist, um den sich einstellenden Ausdehnungskoeffizienten im äußeren Raumbereich an jenen im inneren Raumbereich anzupassen. Da ein solcher Volumenanteil der Partikel durch Entmischung des Gemisches unter Kenntnis der dafür notwenigen Ausgangsvolumina erzielbar ist, kann die beim konventionellen Verbundmaterial durch dessen Fasermaterial entstehende Oberflächentextur in diesem Ausführungsbeispiel praktisch vollständig ausgeglichen werden.

Zur Herstellung des Verbundmaterials wird das Fasermaterial bereitgestellt (Schritt S1). Mittels Compoundierung in einem Pultrusionsverfahren über einen kontinuierlich laufenden Extruder wird ein Gemisch aus PEEK und Glaskugeln direkt erzeugt, anschließend aufgeschmolzen (Schritt S2) und bereitgestellt (Schritt S3). Das Gemisch wird im aufgeschmolzenen Zustand auf das gespreizte Fasermaterial pultrudiert (Schritt S5). Im Pultrusionsprozess kommt es bei der Imprägnierung des Fasermaterials mit dem Matrixmaterial zur Entmischung und damit zur Erhöhung der Volumenkonzentration der Glaskugeln im äußeren Raumbereich.

Das Verbundmaterial weist nun senkrecht zur Erstreckungsrichtung der Fasern schwindungsangepasste Compound-Zonen außerhalb und teilweise zwischen den imprägnierten Filamenten auf. Als Folge weist das Verbundmaterial im Temperaturbereich zwischen -20 °C und 200°C im Wesentlichen ein gleichsam homogenes Ausdehnungsverhalten auf. Das Verbundmaterial besitzt eine Oberflächengüte ohne lokale Fehlstellen und ist damit auch bei Temperaturwechselbelastung eben und hochglänzend. Benannte Methoden der Ausführungsbeispiele A und B ermöglichen den Nachweis der Oberflächengüte.

## Patentansprüche

1. Faserverstärktes Verbundmaterial (1), umfassend ein Fasermaterial, das mehrere jeweils aus Filamenten (4) gebildete Endlosfasern (2, 3) aufweist, ein Matrixmaterial (6) aus Kunststoff, das einen inneren Raumbereich (5) zwischen den Filamenten (4) einer jeweiligen Endlosfaser (2, 3) ausfüllt und die Endlosfasern (2, 3) in einem äußeren Raumbereich (7) umgibt, und eine Menge von Partikeln (8), wobei eine erste Volumenkonzentration der Partikel (8) bezogen auf das Matrixmaterial (6) im inneren Raumbereich (5) geringer als eine zweite Volumenkonzentration der Partikel (8) bezogen auf das Matrixmaterial (6) im äußeren Raumbereich (7) ist,
**dadurch gekennzeichnet,**
**dass** die zweite Volumenkonzentration im äußeren Raumbereich (7) derart an eine auf das Matrixmaterial (6) bezogene Volumenkonzentration der Filamente (4) im inneren Raumbereich angepasst ist, dass sich temperaturabhängige Materialeigenschaften des Verbundmaterials (1) im äußeren Raumbereich (7) und im inneren Raumbereich (5) angleichen.

2. Verbundmaterial nach Anspruch 1, **dadurch gekennzeichnet, dass** die erste Volumenkonzentration und die zweite Volumenkonzentration derart gewählt sind, dass
- ein temperaturspezifischer Ausdehnungskoeffizient des Verbundmaterials (1) im inneren Raumbereich (5) um höchstens 15% von einem temperaturspezifischen Ausdehnungskoeffizienten des Verbundmaterials (1) im äußeren Raumbereich (7) abweicht und/oder
- eine ein viskoelastisches Verhalten des Verbundmaterials (1) beschreibende zeitliche Ausdehnungsgröße im inneren Raumbereich (5) um höchstens 25 % von der zeitlichen Ausdehnungsgröße im äußeren Raumbereich (7) abweicht.

3. Verbundmaterial nach Anspruch 1 oder 2, **dadurch gekennzeichnet, dass** die zweite Volumenkonzentration wenigstens 80 % beträgt.

4. Verbundmaterial nach einem der vorhergehenden Ansprüche, **dadurch gekennzeichnet, dass** ein durchschnittlicher Durchmesser zumindest oberflächennaher Filamente (4) einer jeweiligen Endlosfaser (2, 3) geringer oder gleich oder höchstens um 20 % größer als eine durchschnittliche maximale Ausdehnung der Partikel (8) in einer Raumrichtung ist.

5. Verbundmaterial nach einem der vorhergehenden Ansprüche, **dadurch gekennzeichnet, dass** das Matrixmaterial (6) einen teilkristallinen Kunststoff, insbesondere Polypropylen und/oder Polyetheretherketon, und/oder einen amorphen Kunststoff, insbesondere Polycarbonat, umfasst.

6. Verbundmaterial nach einem der vorhergehenden Ansprüche, **dadurch gekennzeichnet, dass** die Partikel (8)
- Glaspartikel, insbesondere Glashohlkörper, und/oder Karbonpartikel und/oder mineralische Partikel und/oder keramische Partikel und/oder temperatur- und/oder druckexpandierte Partikel umfassen und/oder
- zumindest teilweise stoffgleich zu den Endlosfasern (2, 3) sind und/oder
- eine um mindestens 50 % geringere Dichte als das das Matrixmaterial (6) aufweisen und/oder
- im Wesentlichen sphärisch sind, insbesondere ein Aspektverhältnis zwischen 0,75 und 1,25 aufweisen.

7. Verbundmaterial nach einem der vorhergehenden Ansprüche, **dadurch gekennzeichnet, dass**
- das Fasermaterial ein biaxiales Glasfasergelege und/oder -gewebe ist oder umfasst,
- das Matrixmaterial (6) Polypropylen ist oder umfasst und
- die Partikel (8) vollständig oder teilweise aus einem Erdalkalimetallkarbonat und/oder als gebrochene Partikel gebildet sind;
oder dass
- das Fasermaterial ein Glasfaser-Filamentgewebe ist oder umfasst,
- das Matrixmaterial (6) Polycarbonat ist oder umfasst und
- die Partikel (8) Glashohlkugeln sind oder umfassen;
oder dass
- das Fasermaterial unidirektional angeordnete Kohlestofffasern umfasst,
- das Matrixmaterial (6) Polyetheretherketon ist oder umfasst und
- die Partikel (8) Glaskugeln sind oder umfassen.

8. Verbundmaterial nach einem der vorhergehenden Ansprüche, **dadurch gekennzeichnet, dass** ein temperaturspezifischer Ausdehnungskoeffizient der Endlosfasern (2, 3) um höchstens 15 % von einem temperaturspezifischen Ausdehnungskoeffizienten der Partikel (8) abweicht.

9. Verfahren zur Herstellung eines faserverstärkten Verbundmaterials (1), insbesondere nach einem der vorhergehenden Ansprüche, mit den Schritten:
- Bereitstellen eines Fasermaterials, das mehrere jeweils aus Filamenten (4) gebildete Endlosfasern (2, 3) aufweist;
- Bereitstellen eines Matrixmaterials (6) aus Kunststoff und einer Menge von Partikeln (8);
- Zugeben des Matrixmaterials (6) und der Partikel (8) zum Fasermaterial; und
- anschließendes Beaufschlagen des Fasermaterials, des Matrixmaterial und der Partikel mit einem äußeren Druck;
wobei sich das Matrixmaterial (6) und die Partikel (8) während des Zugebens und/oder der Druckbeaufschlagung derart trennen, dass eine erste Volumenkonzentration der Partikel (8) bezogen auf das Matrixmaterial (6) in einem inneren Raumbereich (5) zwischen den Filamenten (4) einer Endlosfaser (2, 3) geringer als eine zweite Volumenkonzentration der Partikel (8) bezogen auf das Matrixmaterial (6) in einem äußeren Raumbereich (7) außerhalb der Filamente (4) wird, wobei die zweite Volumenkonzentration im äußeren Raumbereich (7) derart an eine auf das Matrixmaterial (6) bezogene Volumenkonzentration der Filamente (4) im inneren Raumbereich angepasst wird, dass sich temperaturabhängige Materialeigenschaften des Verbundmaterials (1) im äußeren Raumbereich (7) und im inneren Raumbereich (5) angleichen.

10. Herstellungsverfahren nach Anspruch 9, **dadurch gekennzeichnet, dass** das Matrixmaterial (6) und die Partikel (8) während des Zugebens und/oder der Druckbeaufschlagung eine Endlosfaser (2, 3) umgeben, wonach der innere Raumbereich (5) zwischen den Filamenten (4) der Endlosfaser durch das getrennte Matrixmaterial getränkt wird.

11. Herstellungsverfahren nach Anspruch 9 oder 10, **dadurch gekennzeichnet, dass** sich die Partikel (8) während des Zugebens und/oder der Druckbeaufschlagung
- zumindest außerhalb des inneren Raumbereichs (5), insbesondere an einer äußeren Grenzfläche des Matrixmaterials (6), anordnen und/oder
- inhomogen, insbesondere in eine Raumrichtung senkrecht zu einer durch die Erstreckungsrichtung der Endlosfasern (2, 3) aufgespannten Ebene, anordnen.

12. Herstellungsverfahren nach einem der Ansprüche 9 bis 11, **dadurch gekennzeichnet, dass** sich ein Volumen der Partikel (8) bei der Druckbeaufschlagung und/oder einer Temperaturbeaufschlagung um mindestens einen Faktor 1,5 gegenüberüber ihrem Volumen bei ihrer Bereitstellung vergrößert.

13. Herstellungsverfahren nach einem der Ansprüche 9 bis 12, **dadurch gekennzeichnet, dass** ein das Matrixmaterial (6) und die Partikel (8) umfassendes Gemisch durch Compoundierung erzeugt und zu Fasermaterial zugegeben wird, oder dass das Matrixmaterial (6) und die Partikel (8) durch Streuen dem Fasermaterial zugegeben wird.

14. Herstellungsverfahren nach Anspruch 13, wobei
- das Gemisch durch Compoundierung in einem Pultrusionsverfahren über einen Extruder erzeugt wird und/oder im plastifizierten Zustand auf das Fasermaterial pultrudiert wird; oder
- das durch Streuen zugegebene Matrixmaterial (6) vor dem Beaufschlagen mit dem äußeren Druck durch eine Temperaturbeaufschlagung und/oder eine Druckbeaufschlagung am Fasermaterial fixiert wird.

15. Herstellungsverfahren nach einem der Ansprüche 9 bis 14, **dadurch gekennzeichnet, dass** das Beaufschlagen mit dem äußeren Druck mittels einer Intervallheißpresse oder mittels einer kontinuierlich arbeitenden Doppelbandpresse erfolgt.

## Claims

1. A fibre-reinforced composite material (1) comprising a fibre material having a plurality of continuous fibres (2, 3) each formed of filaments (4), a matrix material (6) of plastics material filling an inner space region (5) between the filaments (4) of a respective continuous fibre (2, 3) and surrounding the continuous fibres (2, 3) in an outer space region (7), and a quantity of particles (8), wherein a first volume concentration of the particles (8) relative to the matrix material (6) in the inner space region (5) is less than a second volume concentration of the particles (8) relative to the matrix material (6) in the outer space region (7),
**characterized in that**
the second volume concentration in the outer space region (7) is adapted to a volume concentration of the filaments (4) in the inner space region relative to the matrix material (6) in such a way that temperature-dependent material properties of the composite material (1) in the outer space region (7) and in the inner space region (5) are equalized.

2. Composite material according to claim 1, **characterized in that** the first volume concentration and the second volume concentration are chosen such that
- a temperature-specific coefficient of expansion of the composite material (1) in the inner space region (5) deviates by at most 15 % from a temperature-specific coefficient of expansion of the composite material (1) in the outer space region (7) and/or
- a temporal expansion variable describing a viscoelastic behaviour of the composite material (1) in the inner space region (5) deviates by at most 25 % from the temporal expansion variable in the outer space region (7).

3. Composite material according to claim 1 or 2, **characterized in that** the second volume concentration is at least 80 %.

4. Composite material according to any of the preceding claims, **characterized in that** an average diameter of at least near-surface filaments (4) of a respective continuous fibre (2, 3) is smaller than or equal to or at most 20 % larger than an average maximum extension of the particles (8) in a spatial direction.

5. Composite material according to any of the preceding claims, **characterized in that** the matrix material (6) comprises a partially crystalline plastic, in particular polypropylene and/or polyetheretherketone, and/or an amorphous plastic, in particular polycarbonate.

6. Composite material according to any of the preceding claims, **characterized in that** the particles (8)
- comprise glass particles, in particular hollow glass particles, and/or carbon particles and/or mineral particles and/or ceramic particles and/or temperature- and/or pressure-expanded particles and/or
- are at least partially of the same material as the continuous fibres (2, 3) and/or
- have a density at least 50 % lower than that of the matrix material (6) and/or
- are substantially spherical, in particular have an aspect ratio between 0.75 and 1.25.

7. Composite material according to any of the preceding claims, **characterized in that**
- the fibre material is or comprises a biaxial glass fibre scrim and/or fabric,
- the matrix material (6) is or comprises polypropylene and
- the particles (8) are formed wholly or partly from an alkaline earth metal carbonate and/or as broken particles;
or that
- the fibre material is or comprises a glass fibre filament fabric,
- the matrix material (6) is or comprises polycarbonate and
- the particles (8) are or comprise hollow glass spheres;
or that
- the fibre material comprises unidirectionally arranged carbon fibres,
- the matrix material (6) is or comprises polyetheretherketone and
- the particles (8) are or comprise glass spheres.

8. Composite material according to any of the preceding claims, **characterized in that** a temperature-specific coefficient of expansion of the continuous fibres (2, 3) differs by at most 15 % from a temperature-specific coefficient of expansion of the particles (8).

9. Method for producing a fibre-reinforced composite material (1), in particular according to one of the preceding claims, comprising the steps:
- providing a fibre material comprising a plurality of continuous fibres (2, 3) each formed of filaments (4);
- providing a matrix material (6) of plastic and a quantity of particles (8);
- adding the matrix material (6) and the particles (8) to the fibre material; and
- subsequently subjecting the fibre material, the matrix material and the particles to an external pressure;
wherein the matrix material (6) and the particles (8) separate during the addition and/or pressurisation such that a first volume concentration of the particles (8) relative to the matrix material (6) in an inner space region (5) between the filaments (4) of a continuous fibre (2, 3) becomes less than a second volume concentration of the particles (8) relative to the matrix material (6) in an outer space region (7) outside the filaments (4), wherein the second volume concentration in the outer spatial region (7) is adapted to a volume concentration of the filaments (4) related to the matrix material (6) in the inner spatial region in such a way that temperature-dependent material properties of the composite material (1) in the outer spatial region (7) and in the inner spatial region (5) are equalized.

10. Method according to claim 9, **characterized in that** the matrix material (6) and the particles (8) surround a continuous fibre (2, 3) during addition and/or pressurization, after which the inner space region (5) between the filaments (4) of the continuous fibre is impregnated by the separated matrix material.

11. Method according to claim 9 or 10, **characterized in that** the particles (8) arrange themselves during addition and/or pressurization.
- at least outside the inner space region (5), in particular at an outer interface of the matrix material (6), and/or
- inhomogeneously, in particular in a spatial direction perpendicular to a plane spanned by the direction of extension of the continuous fibres (2, 3).

12. Method according to any of claims 9 to 11, **characterized in that** a volume of the particles (8) is increased by at least a factor of 1.5 upon pressurization and/or temperature application compared to their volume upon preparation.

13. Method according to any of claims 9 to 12, **characterized in that** a mixture comprising the matrix material (6) and the particles (8) is produced by compounding and added to fibre material, or that the matrix material (6) and the particles (8) are added to the fibre material by scattering.

14. Method according to claim 13, wherein
- the mixture is produced by compounding in a pultrusion process via an extruder and/or is pultruded onto the fibre material in the plasticized state; or
- the matrix material (6) added by scattering is fixed to the fibre material by a temperature application and/or a pressure application before being subjected to the external pressure.

15. Method according to any of claims 9 to 14, **characterized in that** the application of the external pressure is effected by means of an interval hot press or by means of a continuously operating double belt press.

## Revendications

1. Composite (1) renforcé par des fibres, comprenant un matériau fibreux qui présente plusieurs fibres continues (2, 3) formées respectivement de filaments (4), une matrice (6) en matière plastique qui remplit un volume intérieur (5) entre les filaments (4) d'une fibre continue (2, 3) respective et entoure les fibres continues (2, 3) dans un volume extérieur (7), et une quantité de particules (8), une première concentration volumique des particules (8) rapportée à la matrice (6) dans le volume intérieur (5) étant inférieure à une seconde concentration volumique des particules (8) rapportée à la matrice (6) dans le volume extérieur (7),
**caractérisé en ce que**,
la seconde concentration volumique dans le volume extérieur (7) est adaptée à une concentration volumique des filaments (4) rapportée à la matrice (6) dans le volume intérieur, de telle sorte que des propriétés du composite (1) qui dépendent de la température sont ajustées dans le volume extérieur (7) et dans le volume intérieur (5).

2. Composite selon la revendication 1, **caractérisé en ce que** la première concentration volumique et la seconde concentration volumique sont sélectionnées de telle sorte
- qu'un coefficient de dilatation spécifique à la température du composite (1) dans le volume intérieur (5) diffère de maximum 15% d'un coefficient de dilatation spécifique à la température du composite (1) dans le volume extérieur (7) et/ou
- qu'une variable de dilatation temporelle décrivant un comportement viscoélastique du composite (1) dans le volume intérieur (5) diffère de maximum 25 % de la variable de dilatation temporelle dans le volume extérieur (7).

3. Composite selon la revendication 1 ou 2, **caractérisé en ce que** la seconde concentration volumique est d'au moins 80 %.

4. Composite selon l'une des revendications précédentes, **caractérisé en ce qu'**un diamètre moyen des filaments (4) tout au moins proches de la surface d'une fibre continue (2, 3) respective est inférieur ou égal ou est au maximum 20 % supérieur à une dilatation maximale moyenne des particules (8) dans une direction dans l'espace.

5. Composite selon l'une des revendications précédentes, **caractérisé en ce que** la matrice (6) comporte un plastique semi-cristallin, en particulier un polypropylène et/ou polyétheréthercétone, et/ou un plastique amorphe, en particulier un polycarbonate.

6. Composite selon l'une des revendications précédentes, **caractérisé en ce que** les particules (8)
- comportent des particules de verre, en particulier des corps creux en verre, et/ou des particules de carbone et/ou des particules minérales et/ou des particules céramiques et/ou des particules expansées en température et/ou en pression et/ou
- sont au moins partiellement du même matériau que les fibres continues (2, 3) et/ou
- présentent une densité inférieure d'au moins 50 % à la matrice (6) et/ou
- sont sensiblement sphériques, présentent en particulier un rapport d'aspect compris entre 0,75 et 1,25.

7. Composite selon l'une des revendications précédentes, **caractérisé en ce que**
- le matériau fibreux est ou comporte une toile et/ou un tissu en fibre de verre biaxial,
- la matrice (6) est ou comporte du polypropylène et
- les particules (8) sont composées entièrement ou partiellement d'un carbonate de métal alcalino-terreux et/ou sont sous forme de particules brisées ;
ou que
- le matériau fibreux est ou comporte un tissu en fil continu de fibre de verre,
- la matrice (6) est ou comporte du polycarbonate et
- les particules (8) sont ou comportent des sphères creuses de verre ;
ou que
- le matériau fibreux comporte des fibres de carbone disposées de manière unidirectionnelle,
- la matrice (6) est ou comporte du polyétheréthercétone et
- les particules (8) sont ou comportent des sphères de verre.

8. Composite selon l'une des revendications précédentes, **caractérisé en ce qu'**un coefficient de dilatation spécifique à la température des fibres continues (2, 3) diffère de maximum 15 % d'un coefficient de dilatation spécifique à la température des particules (8).

9. Procédé pour la fabrication d'un composite (1) renforcé par des fibres, en particulier selon l'une des revendications précédentes, comprenant les étapes consistant à :
- mettre à disposition un matériau fibreux qui comporte plusieurs fibres continues (2, 3) formées respectivement de filaments (4) ;
- mettre à disposition une matrice (6) en matière plastique et une quantité de particules (8) ;
- ajouter la matrice (6) et les particules (8) au matériau fibreux ; et
- exposer ultérieurement le matériau fibreux, la matrice et les particules à une pression extérieure ;
en ce que la matrice (6) et les particules (8) se séparent pendant l'addition et/ou la mise en pression de telle sorte qu'une première concentration volumique des particules (8) rapportée à la matrice (6) dans un volume intérieur (5) entre les filaments (4) d'une fibre continue (2, 3) devient inférieure à une seconde concentration volumique des particules (8) rapportée à la matrice (6) dans un volume extérieur (7) en dehors des filaments (4), en ce que la seconde concentration volumique dans le volume extérieur (7) est adaptée à une concentration volumique des filaments (4) rapportée à la matrice (6) dans le volume intérieur de telle sorte que des propriétés du composite (1) qui dépendent de la température sont ajustées dans le volume extérieur (7) et dans le volume intérieur (5).

10. Procédé de fabrication selon la revendication 9, **caractérisé en ce que** la matrice (6) et les particules (8) entourent une fibre continue (2, 3) pendant l'addition et/ou la mise en pression, selon lequel le volume intérieur (5) entre les filaments (4) des fibres continues est imprégné par la matrice séparée.

11. Procédé de fabrication selon la revendication 9 ou 10, **caractérisé en ce que** les particules (8) pendant l'addition et/ou la mise en pression
- sont disposées au moins en dehors du volume intérieur (5), en particulier au niveau d'une surface limite extérieure de la matrice (6), et/ou
- sont disposées de manière non homogène, en particulier dans une direction dans l'espace perpendiculaire à un plan défini par la direction dans laquelle s'étendent les fibres continues (2, 3).

12. Procédé de fabrication selon l'une des revendications 9 à 11, **caractérisé en ce qu'**un volume des particules (8) augmente au moins d'un facteur de 1,5 pendant la mise en pression et/ou une mise en température par rapport à leur volume lors de leur mise à disposition.

13. Procédé de fabrication selon l'une des revendications 9 à 12, **caractérisé en ce qu'**un mélange comprenant la matrice (6) et les particules (8) est généré par compoundage et ajouté au matériau fibreux, ou **en ce que** la matrice (6) et les particules (8) sont ajoutées au matériau fibreux par diffusion.

14. Procédé de fabrication selon la revendication 13, en ce que
- le mélange est généré par compoundage dans un procédé de pultrusion par l'intermédiaire d'une extrudeuse et/ou est extrudé par tirage à l'état plastifié sur le matériau fibreux ; ou
- la matrice (6) ajoutée par diffusion est fixée au matériau fibreux par une mise en température et/ou une mise en pression avant l'application de la pression extérieure.

15. Procédé de fabrication selon l'une des revendications 9 à 14, **caractérisé en ce que** l'application de la pression extérieure s'effectue au moyen d'une presse à chaud à intervalles ou au moyen d'une presse à double bande à action continue.
